Europäisches Patentamt

European Patent Office

Office européen des brevets

(11) Veröffentlichungsnummer: **0 499 102 A1**

## EUROPÄISCHE PATENTANMELDUNG

(21) Anmeldenummer: **92101611.9**

(22) Anmeldetag: **31.01.92**

(51) Int. Cl.⁵: **B65D 88/64**

(30) Priorität: **08.02.91 DE 9101471 U**

(43) Veröffentlichungstag der Anmeldung:
**19.08.92 Patentblatt 92/34**

(84) Benannte Vertragsstaaten:
**AT BE CH DE DK ES FR GB IT LI NL**

(71) Anmelder: **Trost, Bärbel**

**W-6965 Schillingstadt(DE)**

(72) Erfinder: **Trost, Bärbel**

**W-6965 Schillingstadt(DE)**

(74) Vertreter: **Bardehle, Heinz, Dipl.-Ing. et al
Patent- und Rechtsanwälte
Bardehle-Pagenberg-Dost-Altenburg-Frohwi-
tter-Geissler & Partner Postfach 86 06 20
W-8000 München 86(DE)**

(54) **Auslaufkonus eines Behälters, z. B. eines Silos.**

(57) Auslaufkonus (2) eines Behälters, z. B. eines Silos (1), für Schüttgut mit Mitteln zu dessen Auflok-kerung zum Austragen unter Schwerkraftwirkung. In den Auslaufkonus ist eine an dessen Innenfläche (5) im wesentlichen angepaßte flächige Einlage (4) aus elastischem Material, z. B. Gummi, eingelegt, die mit ihrem oberen Rand (10) im Bereich des oberen Endes des Auslaufkonus (2) an diesem luftdicht befestigt ist, während der untere Rand (9) der Einlage (4) auf der Innen-fläche (5) lose aufliegt, und in den Zwischenraum (8) zwischen Auslaufkonus (2) und Einlage (4) den Auslaufkonus (2) durchsetzende Lufteintrittsdüsen (6,7) münden, die in den Zwischenraum (8) Druckluft einleiten, die unter Abheben der Einlage (4) von der Innenfläche (5) am unteren Rand (9) der Einlage (4) austritt.

Fig.1

Die Erfindung bezieht sich auf einen Auslaufkonus eines Behälters, z. B. eines Silos, für Schüttgut mit Mitteln zu dessen Auflockerung zum Austragen unter Schwerkraftwirkung.

Für die Auflockerung von Schüttgut im Bereich des Auslaufkonus von Silos sind verschiedene Prinzipien bekannt geworden. Gemäß der DE PS 2 431 170 werden im Auslaufkonus an getrennten Stellen gasdurchlässige Tuchstücke eingesetzt, durch die pulsierend Druckluft in das Schüttgut eingeleitet wird, um dieses direkt zu fluidisieren. Dies soll dadurch unterstützt werden, daß das Tuch vibriert und damit mechanisch auf das Schüttgut einwirkt. Eine ähnlich wirkende Gestaltung ist in der DE OS 2 262 082 offenbart, gemäß der im Auslaufkonus ebenfalls an einzelnen Stellen Lufteintrittsdüsen vorgesehen sind, die auf der Innenseite des Auslaufkonus durch jeweils ein Federblatt abgedeckt sind, das sich bei Einpressen von Druckluft von seiner Sitzfläche abhebt und damit eine Materialauflockerung bewirkt.

Eine prinzipiell andersartige Gestaltung ist in der DE OS 3 319 123 offenbart, gemäß der auf der Innenseite des Auslaufkonus in Abstand von der Austragsöffnung ein durch starre Wandungen begrenzter Raum vorgesehen ist, über den als Fluid dienende Luft in den Auslaufkonus eingeleitet wird. Der Raum erstreckt sich als Ringraum über den oberen Rand des Auslaufkonus und ist mit einem Luftspalt versehen, über den die Luft in das Schüttgut eintritt. In ähnlicher Weise wirkt die aus der DE OS 3 145 017 bekannte Gestaltung, bei der Auslaufkonus insgesamt durch eine nach innen leicht vorgewölbte, trichterförmige Verkleidung abgedeckt ist, die aus einem porösen Material, einem Lochblech oder einem luftdurchlässigen Gewebe besteht. Durch diese Verkleidung wird in das Schüttgut Druckluft eingeleitet, das dem Zwischenraum zwischen dem Auslaufkonus und der Verkleidung zugeführt wird.

Der Erfindung liegt die Aufgabe zugrunde, unter Verwendung einfacher konstruktiver Mittel die Auflockerung des Schüttgutes zum Austragen unter Schwer-kraftwirkung zu intensivieren. Erfindungsgemäß geschieht dies dadurch, daß in den Auslaufkonus eine an dessen Innenfläche im wesentlichen angepaßte flächige Einlage aus elastischem Material, z. B. Gummi, eingelegt ist, die mit ihrem oberen Rand im Bereich des oberen Endes des Auslaufkonus an diesem luftdicht befestigt ist, während der untere Rand der Einlage auf der Innenfläche lose aufliegt, und in den Zwischenraum zwischen Auslaufkonus und Einlage den Auslaufkonus durchsetzende Lufteintrittsdüsen münden, die in den Zwischenraum Druckluft einleiten, die unter Abheben der Einlage von der Innenfläche am unteren Rand der Einlage austritt.

Durch die Verwendung der an die Innenfläche des Auslaufkonus angepaßten flächigen Einlage aus elastischem Material ergibt sich der Effekt, durch Einblasen von Druckluft unter die Einlage das Schüttgut gleichzeitig praktisch über den gesamten Bereich, über den es gegen den Auslaufkonus drückt, aufzulockern, da die durch die Lufteintrittsdüsen eingepresste Druckluft sich im Zwischenraum zwischen Auslaufkonus und Einlage sofort verteilt und die Einlage aufgrund ihrer Elastizität über ihren ganzen Bereich in Bewegung versetzt, die sich somit großflächig dem Schüttgut mitteilt. Die individuelle Einführung der Druckluft über die Lufteintrittsdüsen wird also aufgrund der Wirkung der aus elastischem Material bestehenden Einlage großflächig verteilt. Dies kann mit den oben erwähnten Gestaltungen, die ebenfalls mit einzelnen Lufteintrittsdüsen arbeiten, nicht erzielt werden, da deren Wirkung immer auf den Bereich der jeweiligen Lufteintrittsdüse beschränkt bleibt.

Im Sinne der Auflockerung des Schüttguts wirkt weiterhin die am unteren Rand der Einlage austretende Druckluft, der wegen der luftdichten Befestigung der Einlage an ihrem oberen Rand kein anderer Weg zum Austreten aus dem Zwischenraum zwischen Auslaufkonus und Einlage zur Verfügung steht. Diese am unteren Rand der Einlage austretende Luft gelangt in das durch die Bewegung der Einlage bereits aufgelockerte Schüttgut und durchdringt dieses im Sinne einer Fluidisierung des Schüttgutes. Hierdurch wird die Auflockerung zum Austragen unter Schwerkraftwirkung wesentlich gesteigert.

Die flächige Einlage kann aus einem Stück bestehen und insgesamt einstückig den Auslaufkonus weitgehend überdecken. Es ist aber auch möglich, die Einlage aus mehreren Trichtern zu gestalten, die jeweils an ihrem oberen Rand mit dem Auslaufkonus luftdicht verbunden sind, wobei der Rand eines auf einen oberen Trichter anschließenden Trichters von dem Ende des oberen Trichters überlappend abgedeckt ist. Durch diese Gestaltung werden gewissermaßen ringartig in mehreren aufeinanderfolgenden Stufen eine von dem jeweiligen Trichter ausgehende Bewegung auf das Schüttgut nach innen hin übertragen, wodurch gewissermaßen wellenförmig in Austragsrichtung das Schüttgut aufgelockert wird.

Auch bei mehr oder minder gleichmäßig einströmender Druckluft neigt die Einlage aufgrund ihrer Elastizität zum Flattern, so daß die Auflockerung in Form von ungleichmäßigen Stößen vor sich geht. Diesen Effekt kann man dadurch intensivieren, daß die Lufteintrittsdüsen Druckluftstöße einleiten, wodurch die Einlage impulsweise von der Innenfläche des Auslaufkonus abgehoben wird und damit besonders intensive Druckstöße auf das Schüttgut ausübt. Dies gilt auch im Falle der Gestaltung der Einlage aus mehreren Trichtern, wobei die Druckluftstöße zweckmäßig so aufeinander folgen, daß sich die erwähnte wellenförmig sich fortsetzende Anflockerung des Schüttgutes ergibt.

In den Figuren ist ein Ausführungsbeispiel der Erfindung dargestellt. Es zeigen:

- Figur 1 den Auslaufkonus eines Silos mit einer den Auslaufkonus weitgehend überdekkenden Einlage,
- Figur 2 ebenfalls den Auslaufkonus eines Silos, bei dem jedoch die Einlage aus zwei aufeinanderfolgenden Trichtern aus elastischem Material besteht,
- Figur 3 eine axiale Ansicht in den Auslaufkonus unter Weglassung der Einlage.

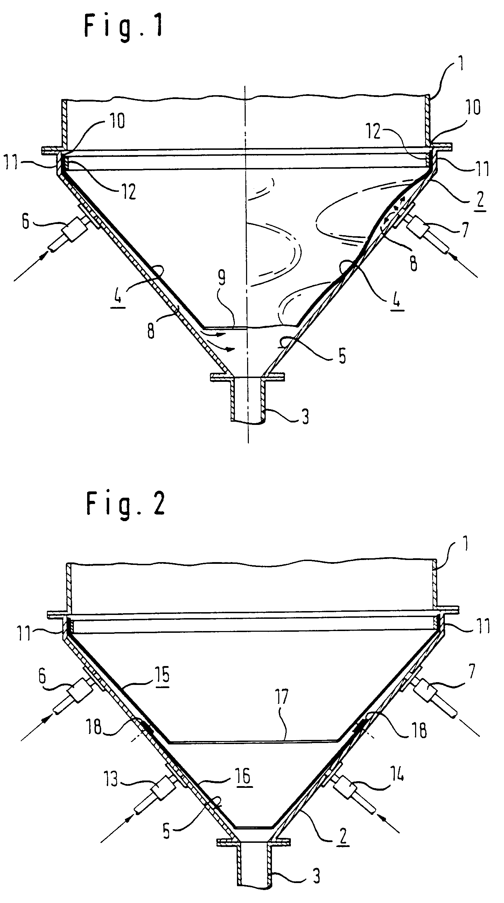

Die Figur 1 zeigt das untere Ende eines Silos 1, der als Behälter für irgendein Schüttgut, z. B. Zement, dienen kann. Der obere Teil des Silos 1 ist aus Gründen der Vereinfachung der Darstellung weggelassen. An den Silo 1 ist der Auslaufkonus 2 angeflanscht, an den das Austragsrohr 3 angeflanscht ist. In den Innenraum des Auslaufkonus 2 ist die Einlage 4 eingelegt, die aus einem elastischem Material, z. B. Gummi, besteht und die sich im wesentlichen über die gesamte Länge des Auslaufkonus 2 erstreckt und im Ruhezustand an der Innenfläche 5 des Auslaufkonus 2 anliegt, da sie in ihrer Form an die Innenfläche 5 angepaßt ist. Der obere Rand 10 der Einlage 4 ist mit dem oberen Ende 11 des Auslaufkonus 2 luftdicht verbunden, und zwar mittels des Spreizringes 12.

Der Auslaufkonus 2 wird von den Lufteintrittsdüsen 6 und 7 durchsetzt, die in den Zwischenraum 8 zwischen der Einlage 4 und dem Auslaufkonus 2 münden. Durch die Lufteintrittsdüsen 6 und 7 wird Druckluft in den Zwischenraum 8 eingeleitet, die Einlage 4 von der Innenfläche 5 des Auslaufkonus 2 abhebt und damit das im Silo lagernde Schüttgut im Bereich des Auslaufkonus 2 auflockert. Die in den Zwischenraum 8 eingeleitete Druckluft fließt zum unteren Rand 9 der Einlage 4 und tritt hier aus dem Zwischenraum 8 aus. Sie gelangt in das den Auslaufkonus 2 ausfüllende Schüttgut und steigt im wesentlichen nach oben, wobei die Luft eine entsprechende Fluidisierung des Schüttgutes bewirkt. Der in den Zwischenraum 8 eingeleiteten Druckluft steht nur der Weg zum unteren Rand 9 zur Verfügung, da die Einlage 4 mit ihrem oberen Rand 10 luftdicht mit dem oberen Ende 11 des Auslaufkonus 2 verbunden ist.

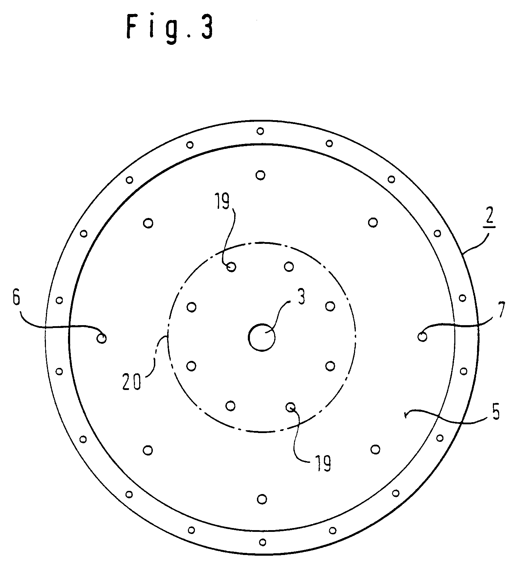

Die Verteilung der Lufteintrittsdüsen 6 und 7 über den Auslaufkonus 2 geht aus der Figur 3 hervor, auf die weiter unten näher eingegangen wird.

Die in den Zwischenraum 8 eingeleitete Druckluft bewirkt aufgrund der Elastizität der Einlage 4 ein Flattern der Einlage 4, was im rechten Teil der Figur 1 durch

die Wellenform der Einlage 4 angedeutet ist. Je stärker dieses Flattern ausgeprägt ist, um so mehr wirkt dieses im Sinne einer Auflockerung des Schüttgutes.

In der Figur 2 ist eine hinsichtlich Silo 1 und Auslaufkonus 2 gleichartige Gestaltung eines Silos dargestellt, bei der jedoch die Einlage aus elastischem Material aus zwei Trichtern 15 und 16 besteht, für die jeweils das elastische Material verwendet wird. Der obere Trichter 15 deckt mit seinem unteren Ende 17 den oberen Rand 18 des unteren Trichters 16 ab, so daß die Innenfläche 5 des Auslaufkonus 2 praktisch vollständig von den beiden Trichtern 15 und 16 überdeckt ist. Der obere Rand 18 ist mit dem Auslaufkonus 2 luftdicht verbunden. Für die Bewegung des Trichters 15 sind die beiden Lufteintrittsdüsen 6 und 7 und für die Bewegung der Trichters 16 die beiden Lufteintrittsdüsen 13 und 14 vorgesehen, die so wirken, wie dies im Zusammenhang mit Figur 1 oben beschrieben ist.

Aufgrund der Anordnung zweier aufeinanderfolgender Trichter als Einlage läßt sich eine schrittweise individuelle Auflockerung des Schüttgutes erreichen, da aufeinanderfolgend Druckluftstöße durch die Lufteintrittsdüsen 6 und 7 und anschließend durch die Lufteintrittsdüsen 13 und 14 eingeblasen werden können, so daß gewissermaßen eine in Richtung zum Austragsrohr 3 hin verlaufende wellenförmige Flatterbewegung der beiden Trichter 15 und 16 entsteht, die somit das Fortschreiten des Schüttgutes bei seinem Austragen berücksichtigt. Es sei noch darauf hingewiesen, daß anstelle von zwei Trichtern 15 und 16 auch drei oder mehr Trichter vorgesehen werden können, je nachdem, wie besonders intensiv gewissermaßen ringartig auf das Schüttgut eingewirkt werden soll.

Figur 3 zeigt in axialer Sicht die Innenfläche 5 des Auslaufkonus 2, wobei aus Gründen der Übersichtlichkeit die Einlage 4 bzw. die Trichter 15 und 16 weggelassen sind. Aus diesen Gründen sind die Mündungen der Lufteintrittsdüsen 6 und 7 sowie weiterer Lufteintrittsdüsen 19 zu sehen. In den mittleren Bereich der Innenfläche 5 ist die strichpunktierte Linie 20 eingezeichnet, durch die im Falle einer Gestaltung der Einlage gemäß Figur 2 der untere Rand 17 des Trichters 15 angedeutet werden soll. Gemäß Figur 3 existieren zwei Kränze von Lufteintrittsdüsen, nämlich ein äußerer Kranz mit den Lufteintrittsdüsen 6 und 7 und ein innerer Kranz mit den Lufteintrittsdüsen 19. Aufgrund dieser Verteilung der Lufteintrittsdüsen ist gewährleistet, daß insbesondere im Falle der Verwendung der beiden Trichter 15 und 16 gemäß Figur 2 über praktisch den gesamten Bereich des Auslaufkonus 2 das in diesem ruhende Schüttgut aufgelockert wird. Wenn nur eine Einlage in dem Auslaufkonus 2 vorgesehen ist, wie dies mit der Einlage 4 gemäß Figur 1 dargestellt ist, dann kann es ausreichend sein, nur den äußeren Kranz mit den Lufteintrittsdüsen 6 und 7 vorzusehen.

**Patentansprüche**

1. Auslaufkonus (2) eines Behälters, z. B. eines Silos (1), für Schüttgut mit Mitteln zu dessen Auflockerung zum Austragen unter Schwerkraftwirkung, **dadurch gekennzeichnet**, daß in den Auslaufkonus (2) eine an dessen Innenfläche (5) im wesentlichen angepaßte flächige Einlage (4) aus elastischem Material, z. B. Gummi, eingelegt ist, die mit ihrem oberen Rand (10) im Bereich des oberen Endes (11) des Auslaufkonus (2) an diesem luftdicht befestigt ist, während der untere Rand (9) der Einlage (4) auf der Innen-fläche (5) lose aufliegt, und in den Zwischenraum (8) zwischen Auslaufkonus (2) und Einlage (4) den Auslaufkonus (2) durchsetzende Lufteintrittsdüsen (6, 7) münden, die in den Zwischenraum (8) Druckluft einleiten, die unter Abheben der Einlage (4) von der Innenfläche (5) am unteren Rand (9) der Einlage (4) austritt.

2. Auslaufkonus nach Anspruch 1, **dadurch gekennzeichnet**, daß die Einlage aus mehreren Trichtern (15, 16) besteht, die jeweils an ihrem oberen Rand (11, 18) mit dem Auslaufkonus (2) luftdicht verbunden sind, wobei der Rand (18) eines auf einen oberen Trichter (15) anschließenden Trichters (16) von dem unteren Ende (17) des oberen Trichters (15) überlappend abgedeckt ist.

3. Auslaufkonus nach Anspruch 1 oder 2, **dadurch gekennzeichnet**, daß die Lufteintrittsdüsen (5, 6; 13, 14) Druckluftstöße einleiten.

# Fig.1

# Fig.2

# Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 199 282 (JOHNSON)<br>* Spalte 1, Absatz 1 *<br>* Spalte 3, Zeile 19 - Spalte 4, Zeile 7 *<br>* Zusammenfassung; Abbildungen 1-8 *<br>--- | 1,3 | B65D88/64 |
| A | SOVIET INVENTIONS ILLUSTRATED<br>Section Ch, Week 8514, 15. Mai 1985<br>Derwent Publications Ltd., London, GB;<br>Class L, AN 85-085997/14<br>& SU-A-1 114 595 (BORSY GLASS) 23. September 1984<br>* Zusammenfassung *<br>--- | 1,3 | |
| A | US-A-3 099 494 (HEINZE)<br>* das ganze Dokument *<br>--- | 1,2 | |
| D,A | DE-A-3 319 123 (BRIAB)<br>* Seite 6, Zeile 16 - Seite 7, Zeile 21;<br>Abbildungen 1-3 *<br><br>----- | 1 | |
| | | | **RECHERCHIERTE SACHGEBIETE (Int. Cl.5 )**<br><br>B65D |

Der vorliegende Recherchenbericht wurde für alle Patentansprüche erstellt

| Recherchenort | Abschlußdatum der Recherche | Prüfer |
|---|---|---|
| BERLIN | 19 MAI 1992 | SPETTEL J.O.M.L. |